Europäisches Patentamt

European Patent Office

Office européen des brevets

(19)

(11) Numéro de publication : **0 466 896 B1**

# (12) FASCICULE DE BREVET EUROPEEN

(45) Date de publication du fascicule du brevet :
**15.09.93 Bulletin 93/37**

(51) Int. Cl.⁵ : **G01B 11/08,** G01B 11/10,
B65H 63/06

(21) Numéro de dépôt : **91903867.9**

(22) Date de dépôt : **05.02.91**

(86) Numéro de dépôt international :
**PCT/FR91/00077**

(87) Numéro de publication internationale :
**WO 91/12488 22.08.91 Gazette 91/19**

(54) **PROCEDE ET DISPOSITIF DE MESURE D'AU MOINS UNE DIMENSION TRANSVERSALE D'UN FIL TEXTILE.**

(30) Priorité : **06.02.90 FR 9001494**

(43) Date de publication de la demande :
**22.01.92 Bulletin 92/04**

(45) Mention de la délivrance du brevet :
**15.09.93 Bulletin 93/37**

(84) Etats contractants désignés :
**CH DE ES FR GB IT LI**

(56) Documents cités :
**DD-A- 256 752**
**GB-A- 2 110 364**
**US-A- 3 518 007**
**US-A- 3 709 610**

(73) Titulaire : **SUPERBA S.A.**
**13 rue de Pfastatt, B.P. 2156**
**F-68060 Mulhouse Cédex (FR)**

(72) Inventeur : **DURAND, Bernard**
**28, rue du Rhin**
**F-68120 Pfastatt (FR)**

(74) Mandataire : **Nithardt, Roland et al**
**CABINET NITHARDT & BURKARD S.A., 24 rue de l'Est - B.P. 1445**
**F-68071 Mulhouse Cédex (FR)**

Jouve, 18, rue Saint-Denis, 75001 PARIS

## Description

La présente invention concerne un procédé de mesure d'au moins une dimension transversale d'un fil textile dans lequel on éclaire le fil au moyen d'au moins un faisceau lumineux émis par une source de lumière cohérente, on examine la figure d'interférence obtenue dans le plan focal d'un système optique et on déduit ladite dimension transversale de la distance séparant les franges d'interférence.

Elle concerne également, comme décrit dans US-A-3 709 610 un dispositif de mesure d'au moins une dimension transversale d'un fil textile, dans lequel on éclaire le fil au moyen d'au moins un faisceau lumineux émis par une source de lumière cohérente, on examine la figure d'interférence obtenue dans le plan focal d'un système optique et on déduit ladite dimension transversale de la distance séparant les franges d'interférence pour la mise en oeuvre du procédé ci-dessus.

Les procédés connus qui font une analyse du spectre de diffraction dans le plan focal d'un système optique présentent plusieurs inconvénients. Selon les dimensions des fils mesurés, les franges d'interférence sont plus ou moins écartées, de sorte que selon le type de fil analysé la sensibilité change. Par conséquent, si l'appareil n'est pas conçu pour un type de fil bien déterminé, la précision de la mesure sera affectée. Par ailleurs, les appareils connus ne -permettent pas de fournir une information sur la forme du fil, c'est-à-dire sur la géométrie de sa section transversale qui peut être circulaire, plus ou moins ovale, voire presque rectangulaire, si le fil a la forme d'un ruban plat ou torsadé.

La présente invention se propose de pallier ces divers inconvénients en réalisant un procédé ainsi qu'un dispositif adaptés à la mesure des dimensions transversales d'un fil, quel que soit le type de fil examiné, et qui permettent de déduire des informations sur la forme géométrique de la section transversale de ce fil.

Dans ce but, le procédé selon l'invention est caractérisé en ce que l'on ménage de part et d'autre du fil au moins deux fentes symétriques par rapport à ce fil pour former deux sources secondaires agencées pour interférer et en ce que l'on déduit ladite dimension transversale du fil de l'écart entre les franges de la figure d'interférence obtenue.

Selon un mode préféré, on règle la largeur desdites fentes symétriques en fonction de l'ordre de grandeur de ladite dimension transversale du fil.

Selon une variante particulièrement avantageuse, on ménage de part et d'autre du fil deux paires de fentes symétriques par rapport à ce fil et perpendiculaires deux à deux, on éclaire la première paire de fentes au moyen d'un premier faisceau de lumière cohérente et la deuxième paire de fentes au moyen d'un deuxième faisceau de lumière cohérente, ces deux faisceaux étant perpendiculaires entre eux, on déduit des figures d'interférence formées respectivement par les fentes de la première paire de fentes et par celles de la deuxième paire de fentes, les dimensions transversales du fil dans deux directions perpendiculaires.

Dans ce but également, le dispositif selon l'invention est caractérisé en ce qu'il comporte des moyens pour ménager au moins deux fentes symétriques par rapport à ce fil pour former deux sources secondaires agencées pour interférer, des moyens pour analyser la figure d'interférence obtenue et des moyens pour déduire ladite dimension transversale du fil de l'écart entre les franges de la figure d'interférence.

La largeur des fentes est de préférence réglable de manière à permettre d'adapter le dispositif à l'analyse de différents types de fils.

Selon un mode de réalisation préféré le dispositif comporte deux paires de fentes symétriques par rapport au fil et perpendiculaires deux à deux, des moyens pour générer deux faisceaux de lumière cohérente perpendiculaires entre eux et respectivement perpendiculaires aux deux paires de fentes, des moyens pour analyser les figures d'interférence obtenues et des moyens pour déduire de ces figures les dimensions transversales du fil selon deux directions perpendiculaires à l'axe de ce fil et perpendiculaires entre elles.

La présente invention sera mieux comprise en référence à la description d'une forme de réalisation préférée et au dessin annexé dans lequel :

La figure 1 représentge une vue schématique du dispositif pour mesurer une dimension transversale d'un fil,

La figure 2, représente une vue schématique du dispositif pour mesurer deux dimensions transversales du fil selon des axes perpendiculaires, et

La figure 3 représente une forme particulière des images d'interférence obtenues.

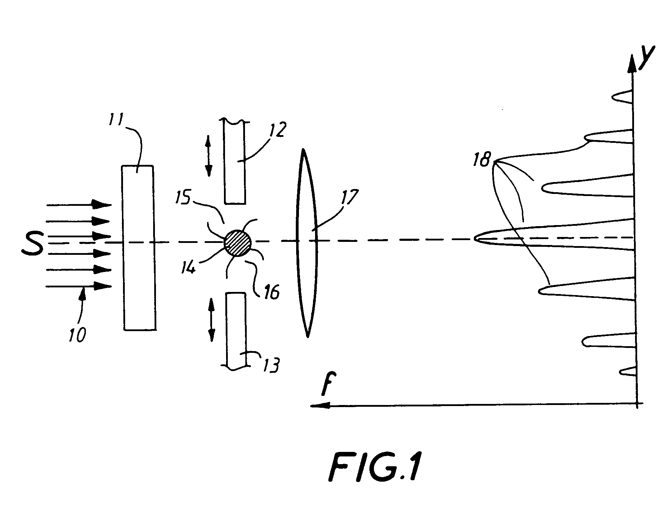

En référence à la figure 1, le dispositif de mesure comporte essentiellement une source S de lumière cohérente émettant un faisceau 10 sur une lentille cylindrique 11. Il comporte par ailleurs deux lames 12 et 13, mobiles axialement, qui sont disposées de part et d'autre d'un fil 14 dont on désire mesurer au moins une dimension transversale. Ces deux lames 12 et 13 sont disposées symétriquement de part et d'autre du fil 14 de manière à définir deux fentes identiques 15 et 16. Ces deux fentes deviennent deux sources secondaires émettant de la lumière en direction d'une lentille 17 et forment dans le plan de cette lentille une figure d'interférence qui est schématiquement représentée en coordonnées Y, f (où Y représente l'écart entre les franges d'interférence 18 et f l'amplitude de ces franges).

Selon la qualité géométrique du fil 14, les bandes alternativement brillantes et sombres sont plus ou moins bien définies, mais leur fréquence est fonction de l'inverse de la distance séparant les deux fentes 15 et 16 c'est-à-dire du diamètre du fil 14. Ces franges d'interférence sont théoriquement plus ou moins écartées selon le diamètre du fil. Le fait de disposer deux lames 12 et 13 réglables, permet de ménager des fentes de largeur appropriée de part et d'autre du fil, quel que soit le diamètre de ce fil, c'est-à-dire d'adapter la sensibilité du dispositif de mesure au type de fil analysé par un simple réglage de l'écartement des lames 12 et 13. Cet écartement peut être réel lorsque l'on modifie l'écartement des fentes ou virtuel lorsque l'on interpose un système optique réglable qui permet de créer à partir des fentes deux sources secondaires virtuelles.

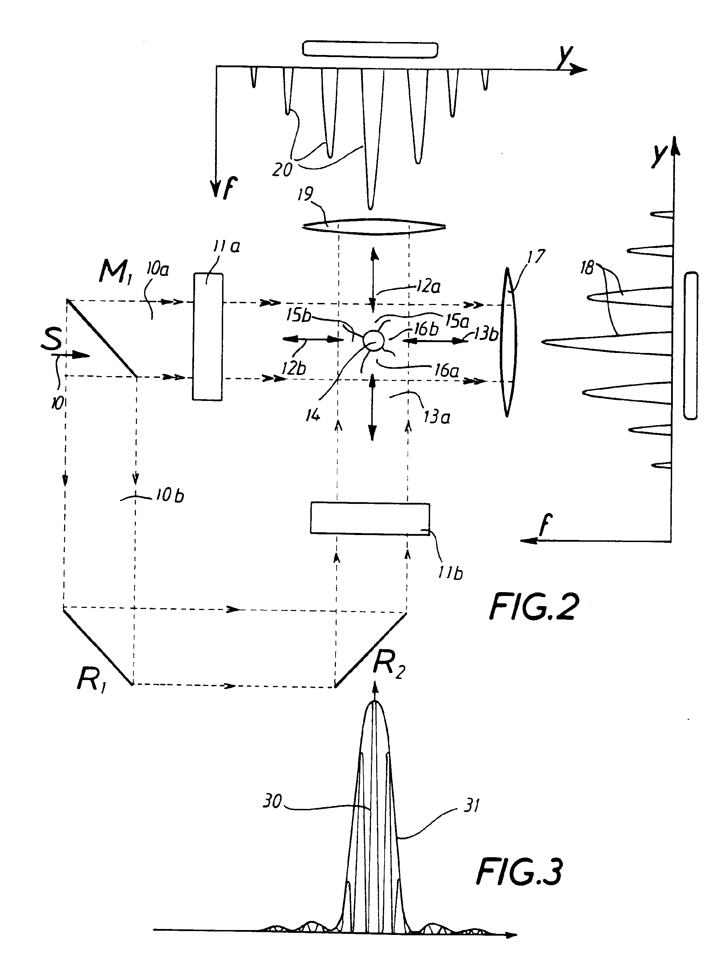

Le dispositif selon la figure 1 permet d'obtenir une information correspondant à une direction transversale du fil. Pour obtenir des informations plus précises sur la géométrie de ce fil, il est indispensable de pouvoir disposer d'informations relatives aux dimensions transversales du fil selon deux directions de préférence perpendiculaires. Ces informations peuvent être obtenues au moyen du dispositif selon la figure 2.

Comme précédemment, ce dispositif comporte une source lumineuse agencée pour émettre un faisceau de lumière cohérente 10. Ce faisceau est envoyé sur un miroir semi-transparent M$_1$ qui le divise en un faisceau 10a et en un faisceau 10b. Le faisceau 10a correspond au faisceau 10 de la figure 1 et est envoyé sur une lentille cylindrique de focalisation 11a identique à la lentille 11 du montage de la figure 1. Le faisceau émergeant de cette lentille est dirigé sur le fil 14 à analyser et sur deux lames 12a et 13a disposées de part et d'autre du fil 14 et agencées pour définir deux fentes 15a et 16c identiques aux fentes 15 et 16 du montage précédent. Dans cette représentation, les lames 12a et 13a sont représentées par des flèches doubles pour indiquer qu'elles sont mobiles axialement dans deux directions opposées. On notera d'ailleurs que les déplacements des lames sont synchronisés étant donné que les fentes doivent être parfaitement symétriques par rapport au fil. Comme précédemment, les fentes 15a et 16a constituent des sources secondaires qui forment à travers la lentille 17 une figure d'interférence dans le plan de cette lentille. Cette figure d'interférence comportent des franges d'interférence 18 identiques aux franges obtenues dans le cadre du montage de la figure 1.

Le faisceau divisé 10b est envoyé sur un réflecteur R$_1$ disposé à 45° qui transmet le faisceau réfléchi sur un second réflecteur R$_2$ également disposé à 45° pour le transmettre finalement sur une lentille cylindrique 11b identique à la lentille 11a. Cette lentille focalise le faisceau sur le fil 14 et sur deux lames respectivement 12b et 13b mobiles axialement qui définissent de part et d'autre du fil deux fentes symétriques 15b et 16b. Ces fentes constituent comme précédemment des sources secondaires qui émettent la lumière sur une lentille 19 formant dans son plan des franges d'interférence 20.

Grâce à ce montage, on obtient des informations sur les dimensions transversales du fil selon deux directions perpendiculaires.

En référence à la figure 3, la figure d'interférence obtenue se compose d'un ensemble de franges de Young 30 qui sont contenues à l'intérieur d'une enveloppe 31. Si a représente la distance entre les fentes, b la distance entre le fil et le bord des plaques, c la largeur de la fente du dispositif, d le diamètre du fil, s la distance entre la fente et la lentille de focalisation, $\lambda$ la longueur d'onde de la lumière, l'interfrange $\Delta y$ est donné par :

$$\Delta y = S\lambda/a = S\lambda/d + b$$

ce qui donne si $\dfrac{S\lambda}{b}=k_1$

$$d = \frac{S\lambda}{\Delta y - k_1}$$

On peut également considérer la courbe enveloppe et dans ce cas :

$$\Delta y = S\lambda/b = 2S / c - d$$

ce qui donne si $\dfrac{2S}{c} = k_2$

$$d = \frac{S\lambda}{k_2 - \Delta y}$$

## Revendications

1. Procédé de mesure d'au moins une dimension transversale d'un fil textile dans lequel on éclaire le fil au moyen d'au moins un faisceau lumineux émis par une source de lumière cohérente, on examine la figure d'interférence obtenue dans le plan focal d'un système optique et on déduit ladite dimension transversale de la distance séparant les franges d'interférence, caractérisé en ce que l'on ménage de part et d'autre du fil au moins deux fentes symétriques par rapport à ce fil pour former deux sources secondaires agencées pour interférer et en ce que l'on déduit ladite dimension transversale du fil de l'écart entre les franges de la figure d'interférence obtenue.

2. Procédé selon la revendication 1, caractérisé en ce que l'on règle la largeur desdites fentes symétriques en fonction de l'ordre de grandeur de ladite dimension transversale du fil.

3. Procédé selon la revendication 1, caractérisé en ce que l'on ménage de part et d'autre du fil deux paires de fentes symétriques par rapport à ce fil et perpendiculaires deux à deux, en ce que l'on éclaire la première paire de fentes au moyen d'un premier faisceau de lumière cohérente et la deuxième paire de fentes au moyen d'un deuxième faisceau de lumière cohérente, ces deux faisceaux étant perpendiculaires entre eux, en ce que l'on déduit des figures d'interférence formées respectivement par les fentes de la première paire de fentes et par celles de la deuxième paire de fentes, les dimensions transversales du fil dans deux directions perpendiculaires.

4. Dispositif de mesure d'au moins une dimension transversale d'un fil textile dans lequel on éclaire le fil (14) au moyen d'au moins un faisceau lumineux émis par une source de lumière cohérente (S), on examine la figure d'interférence obtenue dans le plan focal d'un système optique (17) et on déduit ladite dimension transversale de la distance séparant les franges d'interférence, pour la mise en oeuvre du procédé selon la revendication 1, caractérisé en ce qu'il comporte des moyens pour ménager au moins deux fentes symétriques (15, 16) par rapport à ce fil (14) pour former deux sources secondaires agencées pour interférer, des moyens pour analyser la figure d'interférence obtenue et des moyens pour déduire ladite dimension transversale du fil de l'écart entre les franges (18) de la figure d'interférence.

5. Dispositif selon la revendication 4, caractérisé en ce que la largeur des fentes est réglable.

6. Dispositif selon la revendication 4, caractérisé en ce qu'il comporte deux paires de fentes symétriques (15a, 16a; 15b, 16b) par rapport au fil et perpendiculaires deux à deux, des moyens pour générer deux faisceaux de lumière cohérente perpendiculaires entre eux et respectivement perpendiculaires aux deux paires de fentes, des moyens pour analyser les figures d'interférence obtenues et des moyens pour déduire de ces figures les dimensions transversales du fil selon deux directions perpendiculaires à l'axe de ce fil et perpendiculaires entre elle.

**Patentansprüche**

1. Verfahren zur Messung mindestens einer Querdimension eines Textilfadens, bei dem der Faden mittels mindestens eines von einer kohärenten Lichtquelle gesendeten Lichtbündels beleuchtet wird, das auf Fokalebene eines optischen Systems erhaltene Interferenzbild geprüft wird, und die besagte Querdimension von der die Interferenzstreifen trennende Entfernung abgeleitet wird, dadurch gekennzeichnet, daß auf beiden Seiten des Fadens mindestens zwei im Verhältnis zu diesem Faden symmetrische Schlitze angeordnet werden, um zwei für die Interferenz geeignete Sekundärquellen zu bilden, und daß die besagte Querdimension des Fadens vom Abstand zwischen den Streifen des erhaltenen Interferenzbildes abgeleitet wird.

2. Verfahren gemäß Anspruch 1, dadurch gekennzeichnet, daß die Breite der besagten symmetrischen Schlitze entsprechend der Größenordnung der besagten Querdimension des Fades eingestellt wird.

3. Verfahren gemäß Anspruch 1, dadurch gekennzeichnet, daß auf beiden Seiten des Fadens zwei im Verhältnis zu diesem Faden symmetrische und zueinander senkrecht verlaufende Schlitze vorgesehen sind, daß das erste Schlitzpaar mittels eines ersten kohärenten Lichtbündels und das zweite Schlitzpaar mittels eines zweiten kohärenten Lichtbündels beleuchtet wird, wobei diese beiden Bündel senkrecht zueinander stehen, und daß die Querdimensionen des Fadens in zwei senkrechten Richtungen von den Interferenzbildern abgeleitet werden, die jeweils von den Schlitzen des ersten Schlitzpaares und von denjenigen des zweiten Schlitzpaares gebildet werden.

4. Vorrichtung zur Messung mindestens einer Querdimension eines Textilfadens, bei der der Faden (14) mittels mindestens eines von einer kohärenten Lichtquelle (S) gesendeten Lichtbündels beleuchtet wird, das auf Fokalebene eines optischen Systems (17) erhaltene Interferenzbild geprüft wird, und die besagte Querdimension von der die Interferenzstreifen trennenden Entfernung abgeleitet wird, für die Anwendung des Verfahrens gemäß Anspruch 1, dadurch gekennzeichnet, daß sie Mittel aufweist, mit denen mindestens zwei im Verhältnis zu diesem Faden (14) symmetrische Schlitze (15, 16) hergestellt werden können, um zwei für die Interferenz geeignete Sekundärquellen zu bilden, sowie Mittel zur Analyse des erhaltenen Interferenzbildes und Mittel zur Ableitung der besagten Querdimension des Fadens vom Abstand zwischen den Streifen (18) des Interferenzbildes.

5. Vorrichtung gemäß Anspruch 4, dadurch gekennzeichnet, daß die Breite der Schlitze einstellbar ist.

6. Vorrichtung gemäß Anspruch 4, dadurch gekennzeichnet, daß sie zwei im Verhältnis zu diesem Faden symmetrische und untereinander senkrechte Schlitze (15a, 16a; 15b, 16b) aufweist, sowie Mittel zur Erzeugung von zwei kohärenten, untereinander senkrecht und jeweils senkrecht zu den beiden Schlitzpaaren verlaufenden Lichtbündeln, und Mittel zur Analyse der erhaltenen Interferenzbilder, sowie schließlich Mittel zur Ableitung der Querdimensionen aus diesen Bildern, gemäß zweier zur Achse dieses Fadens und zueinander senkrecht verlaufenden Richtungen.

**Claims**

1. Method for measuring at least one transverse dimension of a textile yarn in which the yarn is lighted using at least one luminous beam emitted by a source of coherent light, the interference figure obtained is examined in the focal plane of an optic system, and said transverse dimension is deduced from the distance between the diffraction fringes, characterized in that at least two apertures are arranged on either side of the yarn, symmetrically with respect to the yarn, to form two secondary luminous sources arranged to interfere, and in that the deduction of said transverse dimension of the yarn is obtained from the distance between fringes on the interference figure.

2. Method according to claim 1, characterized in that the width of said symmetrical apertures is set in accordance with the order of magnitude of said transverse dimension of the yarn.

3. Method according to claim 1, characterized in that two pairs of apertures are arranged on either side of the yarn, symmetrically with respect to the yarn, each pair in a plane perpendicular to the plane of the other, and in that the first pair of apertures is lighted by means of one coherent light beam and the second pair of apertures by means of a second coherent light beam, these two beams being perpendicular the one to the other, and in that from the interference figures formed respectively by the apertures of the first pair of apertures and by those of the second pair of apertures, the transverse dimensions of the yarn in two perpendicular directions are deduced.

4. Device for measuring at least one transverse dimension of a textile yarn in which the yarn (14) is lighted by means of a luminous beam emitted by a coherent light source (S), the interference figure obtained in the focal plane of an optic system (17) is examined, and said transverse dimension is deduced from the distance between interference fringes, the purpose of the device is to implement the method according to claim 1, characterized in that it includes means for arranging at least two apertures (15, 16) that are symmetrical with respect to this yarn (14) to form two secondary light sources arranged so as to interfere, means for analyzing the interference figure obtained, and means for deducing said transverse dimension of the yarn from the distance between the fringes (18) of the interference figure.

5. Device according to claim 4, characterized in that the width of the apertures is adjustable.

6. Device according to claim 4, characterized in that it includes two pairs of apertures (15a, 16a, 15b, 16b) symmetrical with respect to the yarn each pair in a plane perpendicular to the plane of the other, means for generating two beams of coherent light perpendicular to each other and perpendicular respectively to the two pairs of apertures, means for analyzing the interference figures obtained, and means for deducing from the figures the transverse dimensions of the yarn on the two perpendicular directions of the axis of this yarn and perpendicular to each other.

**FIG.1**

FIG.2

FIG.3